# EUROPÄISCHE PATENTSCHRIFT

(11) **EP 2 266 843 B1**
(45) Veröffentlichungstag und Bekanntmachung des Hinweises auf die Patenterteilung: **03.04.2013**
(21) Anmeldenummer: 10004779.4
(22) Anmeldetag: 06.05.2010
(51) Int. Cl.: B60R 9/06

(54) **Transporteinrichtung für einen Heckträger eines Kraftfahrzeuges**
Transport device for a rear carrier of a motor vehicle
Dispositif de transport pour un porte-charge arrière d'un véhicule

(30) Priorität: 19.06.2009 DE 102009025507
(43) Veröffentlichungstag der Anmeldung: 29.12.2010
(60) Teilanmeldung: 13000505.1
(73) Patentinhaber: WESTFALIA - Automotive GmbH, 33378 Rheda-Wiedenbrück (DE)
(72) Erfinder: Hermbusch, Gerhard, 33449 Langenberg (DE)
(74) Vertreter: Bregenzer, Michael

(56) Entgegenhaltungen:
- DE-A1- 4 241 142
- DE-U1- 9 402 459
- US-A- 5 881 937
- US-A1- 2006 261 111

## Beschreibung

Die Erfindung betrifft eine Transporteinrichtung, die insbesondere einen Transportbehälter aufweist oder bildet, für einen Heckträger, gemäß dem oberbegriff des Anspruchs 1.

Eine derartige Transporteinrichtung geht aus US 2006/0261111 A1 hervor.

Ein Heckträger, der an einem Heck eine Kraftfahrzeuges angeordnet oder dort anordenbar ist, dient zum Transport von Gegenständen, häufig beispielsweise Fahrrädern. Dementsprechend hat der Heckträger eine Transportstruktur oder Tragstruktur, in der Regel als Gestell ausgestaltet, auf die die transportierende Last aufgelegt werden kann. Es ist auch bekannt, auf eine solche Tragstruktur eines Heckträgers beispielsweise einen Transportkoffer oder eine Transportbox aufzulegen. Für den Fahrbetrieb muss die jeweilige Transporteinrichtung gesichert werden, wofür man in der Regel Schrauben verwendet. Dementsprechend ist die Montage der Transporteinrichtung am Heckträger kompliziert und benötigt jedenfalls Werkzeug.

Davon ausgehend ist es die Aufgabe der vorliegenden Erfindung, eine Transporteinrichtung, insbesondere eine mit einem Transportbehälter versehene oder einen Transportbehälter bildende Transporteinrichtung, bereitzustellen, die einfach an der Tragstruktur eines Heckträgers für ein Kraftfahrzeug befestigbar ist.

Zur Lösung der Aufgabe ist eine Transporteinrichtung gemäß der technischen Lehre des Anspruchs 1 vorgesehen.

Der Heckträger kann beispielsweise an einem Kupplungsarm einer Anhängekupplung des Kraftfahrzeuges befestigt werden. Auch ein stationär am Kraftfahrzeug befestigter Heckträger kann mit der erfindungsgemäßen Transporteinrichtung versehen werden. Der Heckträger ist beispielsweise in der Art einer Schublade aus dem Heck des Kraftfahrzeuges ausziehbar, um ihn für Transportaufgaben zu nutzen. Somit bildet der Heckträger in dieser Ausgestaltung einen Bestandteil des Kraftfahrzeuges.

Die Befestigung der Transporteinrichtung, die vorzugsweise einen Transportbehälter aufweist oder bildet, ist durch die erfindungsgemäße, einen Riegelkörper aufweisende Befestigungseinrichtung besonders einfach. Der Riegelkörper, der beispielsweise stangenartig ist, muss lediglich zwischen seiner Freigabestellung und seiner Verriegelungsstellung verstellt werden, um die Transporteinrichtung an der Tragstruktur zu verriegeln und zu fixieren oder von dieser entfernbar auszugestalten. Der Riegelkörper kann beispielsweise schwenkbar und/oder schwenkbeweglich an der Transporteinrichtung gelagert sein. Somit verbleibt der Riegelkörper an der Transporteinrichtung. Der Riegelkörper ist also stets verfügbar, wenn er benötigt wird. Separate, verlierbare Bauteile, wie beispielsweise Schrauben und dergleichen, sind nicht erforderlich. Es versteht sich, dass als zusätzliche Befestigungs- oder Sicherungsmaßnahme ein Verschrauben denkbar ist, jedoch nicht bevorzugt.

Der Riegelkörper ist beispielsweise stangenartig. Der Riegelkörper kann aber auch an einem Schwenkklinkenteil oder dergleichen angeordnet oder dadurch gebildet sein.

Der mindestens eine Riegelkörper ist durch eine Federanordnung zweckmäßigerweise in die Verriegelungsstellung federbelastet. Somit verriegelt der Riegelkörper die Transporteinrichtung sozusagen automatisch an der Tragstruktur. Eine manuelle Betätigung des Riegelkörpers in die Verriegelungsstellung ist nicht erforderlich.

Bevorzugt ist es, wenn der Riegelkörper eine Gleitschräge aufweist, mit der er bei einer Bewegung von der Freigabestellung in die Verriegelungsstellung und/oder umgekehrt an der Tragstruktur entlang gleitet. Die Gleitschräge ist beispielsweise an einem freien, der Tragstruktur zugewandten Ende des Riegelkörpers angeordnet. Im Zusammenhang mit der Federbelastung ist so eine besonders einfache Montage der Transporteinrichtung an der Tragstruktur des Heckträgers möglich. Es versteht sich, dass die Gleitschräge aber auch bei einer Demontage der Transporteinrichtung vorteilhaft sein kann, beispielsweise dann, wenn der Riegelkörper bereits einen Teil des Weges von der Verriegelungsstellung in die Freigabestellung betätigt ist, mit Hilfe der Gleitschräge beispielsweise bei einem Wegschwenken oder Wegbewegen der Transporteinrichtung von der Tragstruktur an der Tragstruktur entlang gleitet. Dadurch wird dem Demontagevorgang erleichtert, was jedoch beim später erläuterten Ausführungsbeispiel nicht der Fall ist.

Bevorzugt ist es, wenn der Riegelkörper in der Verriegelungsstellung im Eingriff und/oder Hintergriff mit einer Tragstrukturkomponente der Tragstruktur ist, beispielsweise mit einem Längsträgerteil.

Weiterhin ist es vorteilhaft, wenn der Riegelkörper in der Verriegelungsstellung zwei oder mehr Tragstrukturkomponenten der Tragstruktur relativ zueinander ortsfest festlegt, beispielsweise fixiert. Beispielsweise kann eine Tragstrukturkomponente an der anderen schwenkbeweglich und/oder verschieblich gelagert sein. Wenn der Riegelkörper in der Verriegelungsstellung ist, sind die Tragstrukturkomponenten aneinander festgelegt und können nicht mehr verstellt werden. Beispielsweise kann eine Tragstrukturkomponente ein Auflageteil sein, das bezüglich einer fahrzeugfesten Tragstrukturkomponente wegschwenkbar ist, um einen besseren Zugang zum Kraftfahrzeug zu haben.

Es ist dabei möglich, dass der Riegelkörper oder die Riegelkörper in eine Teil-Verriegelungsstellung bringbar sind, beispielsweise in der Teil-Verriegelungsstellung verrastbar. In der Teil-Verriegelungsstellung bleibt der Riegelkörper zwar in Verriegelungsstellung und Verriegelungseingriff mit der ersten Tragstrukturkomponente, beispielsweise einem Schwenkgestell oder Schiebegestell, gibt aber die zweite Tragstrukturkomponente frei, so dass die erste bezüglich der zweiten Tragstrukturkomponente beweglich ist, z.B. wegschwenkbar, verschiebbar oder dergleichen.

Die Befestigungseinrichtung hat zweckmäßigerweise noch weitere Komponenten. Die Befestigungseinrichtung hat mindestens eine von dem Riegelkörper separate Haltekontur, die mit dem Riegelkörper zusammenwirkend die Transporteinrichtung an der Tragstruktur verriegelt. Die weitere Haltekontur ist bei dem Fixieren der Transporteinrichtung im Eingriff oder Hintergriff mit der Tragstruktur. Die Haltekontur ist beispielsweise starr bzw. feststehend an der Transporteinrichtung. Es versteht sich, dass im Bereich der Haltekontur auch flexible Elemente, beispielsweise Gummiauflagen oder dergleichen, vorgesehen sein können. Die Haltekontur wird beispielsweise durch ein Gestellbauteil, einen Rahmen, ein Gehäuseteil oder dergleichen der Transporteinrichtung gebildet.

An dieser Stelle sei bemerkt, dass selbstverständlich auch mehrere Haltekonturen wie beispielsweise beim Ausführungsbeispiel vorhanden sein können. Auch können mehrere Riegelkörper vorhanden sein, die einzeln beweglich oder miteinander bewegungsgekoppelt sind. Bei bewegungsgekoppelten Variante ist eine einfache Betätigung möglich, damit ein und derselben Betätigungsbewegung mehrere Riegelkörper gemeinsam von der Verriegelungsstellung in die Freigabestellung und/oder umgekehrt betätigbar sein können.

Bevorzugt ist es, wenn die mindestens eine Haltekontur eine Formschlussaufnahme, einen Formschlussvorsprung oder dergleichen aufweist. Der Formschlussvorsprung ist beispielsweise in der Art einer Haltenase ausgestaltet.

Weiterhin ist es vorteilhaft, wenn die Formschlussaufnahme die Tragstruktur, beispielsweise ein Längsträgerteil der Tragstruktur, allein in der Art eines Aufnahmemauls aufnimmt. Es ist aber auch möglich, dass die Formschlussaufnahme in Verbindung mit dem Riegelkörper eine solche aufnahmemaulartige Gestalt hat. In jedem Fall ist es vorteilhaft, wenn die Formschlussaufnahme mit und ohne Zusammenwirkung mit dem mindestens einen Riegelkörper die Tragstruktur jeweils dreiseitig hält, wobei die drei Seiten einander gegenüberliegen. Eine U-förmige Struktur der Formschlussaufnahme ist also vorteilhaft, wobei eine Seite oder ein Schenkel der Aufnahme starr sein kann oder auch durch den mindestens einen Riegelkörper gebildet werden kann.

Vorzugsweise weist die mindestens eine Haltekontur mindestens zwei dem mindestens einen Riegelkörper gegenüberliegende, insbesondere gabelartige Haltevorsprünge oder auch zwei gegenüberliegende Halteaufnahmen auf. Vorteilhaft ist es dabei, wenn der Riegelkörper bezogen auf einen Längsabstand zwischen den Haltevorsprüngen oder Halteaufnahmen zwischen denselben angeordnet ist.

Die Transporteinrichtung weist eine im Wesentlichen U-förmige Tragstruktur-Aufnahme auf. In diese Tragstruktur-Aufnahme greift die Tragstruktur ein, wenn die Transporteinrichtung an der Tragstruktur befestigt ist. Beispielsweise verlaufen zwei nebeneinander angeordnete Längsträgerteile innerhalb der Tragstruktur-Aufnahme. Die Tragstruktur-Aufnahme ist vorzugsweise an einer Unterseite bzw. einer Bodenseite der Transporteinrichtung angeordnet. Diese Ausgestaltung der Transporteinrichtung hat den Vorteil, dass die Transporteinrichtung nicht nur auf der Tragstruktur aufliegt, sondern dass die Tragstruktur sozusagen in die Transporteinrichtung eingreift, was einen besonders festen Halt der Transporteinrichtung am Heckträger ermöglicht.

Insbesondere bei der U-förmigen Ausgestaltung der Tragstruktur-Aufnahme ist es vorteilhaft, wenn aneinander gegenüberliegenden Seiten der Tragstruktur-Aufnahme jeweils eine U-förmige Halteaufnahme zur Aufnahme der Tragstruktur gebildet ist. Beispielsweise ist jeweils ein Längsträger von zwei nebeneinander, insbesondere parallel nebeneinander verlaufenden Längsträgern der Tragstruktur in einer solchen U-förmigen Halteaufnahme aufgenommen. Die U-förmige Halteaufnahme wird beispielsweise durch feststehende Abschnitte der mindestens einen Haltekontur gebildet. Es ist aber auch möglich, dass eine oder mehrere Seiten einer solchen Halteaufnahme durch den mindestens einen Riegelkörper, auch in Verbindung mit feststehenden Abschnitten oder Haltekonturbestandteilen, gebildet ist.

Der mindestens eine Riegelkörper und die mindestens eine Haltekontur sind an einander gegenüberliegenden Seiten der Tragstruktur-Aufnahme angeordnet. Somit ist also auf einer Seite der Tragstruktur-Aufnahme eine feste Haltekontur vorgesehen, während auf der anderen Seite der Riegelkörper eine Lösbarkeit der Transporteinrichtung von der Tragstruktur bzw. dem Heckträger ermöglicht.

Vorteilhaft liegt die Transporteinrichtung flächig an den Bestandteilen der Tragstruktur an, beispielsweise Seitenwänden der vorgenannten Längsträger. Es ist aber auch möglich, dass an Tragstrukturen Profilvorsprünge oder Profile vorgesehen sind, beispielsweise Fahrradträgerrinnen, Lagervorsprünge für Fahrradträgerrinnen oder dergleichen. Dann ist es vorteilhaft, wenn die Transporteinrichtung mindestens eine Profilaufnahme zur Aufnahme bzw. zum Eingriff eines Profils der Tragstruktur aufweist. Eine solche Profilaufnahme ist insbesondere im Bereich des Riegelkörpers vorgesehen, was einen besonders festen Halt der Transporteinrichtung an der Tragstruktur bzw. dem Heckträger ermöglicht.

Vorteilhaft ist es, wenn die Transporteinrichtung verschließbar ist. Diese Verschließbarkeit ist beispielsweise im Zusammenhang mit einem Deckel der Transporteinrichtung vorteilhaft. Aber auch die Befestigungseinrichtung hat zweckmäßigerweise ein Schloss zum Festlegen des mindestens einen Riegelkörpers in Verriegelungsstellung und/oder der Freigabestellung. Somit ist z.B. ein Diebstahlschutz realisiert. Das Schloss kann beispielsweise unmittelbar an dem Riegelkörper angeordnet sein, beispielsweise in einem Längsprofil oder Stangenprofil des Riegelkörpers. Es ist aber auch möglich, dass das Schloss ein von dem Riegelkörper separates Bauteil ist, das in den Riegelkörper eingreift, zumindest mit einem an dem Schloss angeordneten Riegelelement.

Insbesondere abseits des Heckträgers ist es vorteilhaft, wenn die Transporteinrichtung beispielsweise eine oder mehrere Kufen zum Gleiten auf einem Untergrund aufweist. Aber auch zum Aufsetzen oder Aufgleiten auf die Tragstruktur des Heckträgers ist es vorteilhaft, mindestens eine Kufe vorzusehen.

Eine an sich eigenständige Erfindung stellt es dar, wenn die Transporteinrichtung eine Rollenanordnung zum Fahren oder Rollen auf einem Untergrund aufweist. Der Begriff "Rolle" ist so zu verstehen, dass auch Räder, Walzen oder dergleichen umfasst sind. Die Rollenanordnung kann auch zusätzlich zu den vorgenannten Kufen vorgesehen sein. In diesem Zusammenhang sei betont, dass eine mit einer Rollenanordnung versehene Transporteinrichtung selbstverständlich auch anders als mit der erfindungsgemäßen Befestigungseinrichtung an einem Heckträger eines Kraftfahrzeugs befestigbar ist, beispielsweise mittels Schrauben. Die Rollenanordnung umfasst zweckmäßigerweise ein Rollenpaar. Das Rollenpaar ist vorteilhaft an einer Schmalseite der Transporteinrichtung angeordnet, was einen besonders einfachen Transport möglich macht. Der Bediener hebt die Transporteinrichtung zweckmäßigerweise an einer von der Rollenanordnung entfernten Seite der Transporteinrichtung an, um sie auf dem Untergrund zu verfahren. Es versteht sich, dass die Rollenanordnung auch beispielsweise mehr als zwei, z.B. drei oder vier Rollen aufweisen kann, die vorteilhaft dreiseitig bzw. an den Eckbereichen eines Rechteckes oder Trapez' angeordnet sind.

Bei der Rollenanordnung ist es vorteilhaft, wenn eine oder mehrere Rollen nur teilweise für eine Außenkontur der Transporteinrichtung vorstehen. Beispielsweise sind taschenartige Rollenaufnahmen an der Transporteinrichtung vorgesehen. Die Rollen sind somit vor Beschädigungen geschützt. Bevorzugt ist es, wenn Lagerwellen der Rollen in Rastaufnahmen der Transporteinrichtung einrasten und dann dort gelagert sind.

Zurückkommend auf die Befestigungseinrichtung ist es vorteilhaft, wenn diese Bedienhandhabe zur Betätigung des Riegelkörpers aufweist, um diesen zwischen der Verriegelungsstellung und der Freigabestellung zu betätigen. Die Bedienhandhabe ermöglicht also eine manuelle Betätigung des Riegelkörpers. Die Bedienhandhabe kann ein mit dem mindestens einen Riegelkörper einstückiges Bauteil oder auch ein von diesem separates Bauteil sein. Bevorzugt ist es, wenn der Riegelkörper unmittelbar direkt betätigbar ist. Aber auch eine Betätigung mittels eines Übertragungsglieds oder Übertragungsgetriebes, beispielsweise eines Seilzugs oder dergleichen, ist möglich.

Bevorzugt ist es, wenn die Bedienhandhabe von einer Unterseite der Transporteinrichtung oder von einem Innenraum der Transporteinrichtung her betätigbar ist. Im Zusammenhang mit einem abschließbaren Deckel der Transporteinrichtung kann es vorteilhaft sein, wenn die Bedienhandhabe ausschließlich von einem Innenraum der Transporteinrichtung her betätigbar ist. Das stellt einen Diebstahlschutz dar. In einem Innenraum der Transporteinrichtung kann aber auch ein Mittel zum Festlegen des Riegelelements in seiner Verriegelungsstellung vorgesehen sein, beispielsweise ein Querriegel oder dergleichen, um einen Diebstahlschutz im Zusammenhang mit einem verschließbaren Deckel der Transporteinrichtung zu realisieren.

Bevorzugt ist es, wenn die Transporteinrichtung einen Transportbehälter aufweist oder bildet. An dem Transportbehälter ist vorzugsweise ein Deckel beweglich, insbesondere schwenkbeweglich, gelagert. Es ist aber auch möglich, einen von dem Transportrbehälter entfernbaren Deckel vorzusehen. Besonders bevorzugt ist es, wenn der Deckel an einem an einer Seite offenen Lager gelagert ist, so dass man den Deckel werkzeuglos von einem Gehäuse der Transporteinrichtung entfernen kann.

Die Transporteinrichtung weist vorzugsweise mindestens einen Bereich, beispielsweise einen Bereich mit einer Transportkavität, auf, der im am Heckträger montierten Zustand horizontal seitlich neben der Tragstruktur oder auch unterhalb der Tragstruktur angeordnet ist. Dadurch ist eine besonders tiefe Schwerpunktlage möglich. Die Transportkavität kann beispielsweise anders als beim Ausführungsbeispiel zwischen zwei parallel verlaufenden oder nebeneinander verlaufenden Längsträgern der Tragstruktur vorgesehen sein. Die Anordnung seitlich außerhalb neben den vorgenannten Längsträgern ist jedoch bevorzugt. Auf diesem Wege kann besonders einfach die vorgenannte vorteilhafte Ausgestaltung realisiert werden, bei der die Transporteinrichtung eine U-förmige Tragstruktur-Aufnahme aufweist. Es sei allerdings erwähnt, dass bei einer solchen, ein an sich eigenständige Erfindung darstellenden Ausgestaltung der Transporteinrichtung selbstverständlich auch eine andersartige Befestigungsmöglichkeit gegeben ist. Beispielsweise mittels Schrauben, Klammern oder dergleichen.

Weiterhin sei erwähnt, dass die Transporteinrichtung auch ein Gestell und/oder eine Platte aufweisen kann, auf das bzw. auf die dann weitere Gegenstände, beispielsweise Fahrräder, Surfbretter oder dergleichen, montiert werden können. Entsprechende Halterungen, beispielsweise für Surfbretter, Skier oder dergleichen, wären dann an der erfindungsgemäßen Transporteinrichtung vorzusehen.

Nachfolgend wird ein Ausführungsbeispiel der Erfindung anhand der Zeichnung erläutert. Es zeigen:

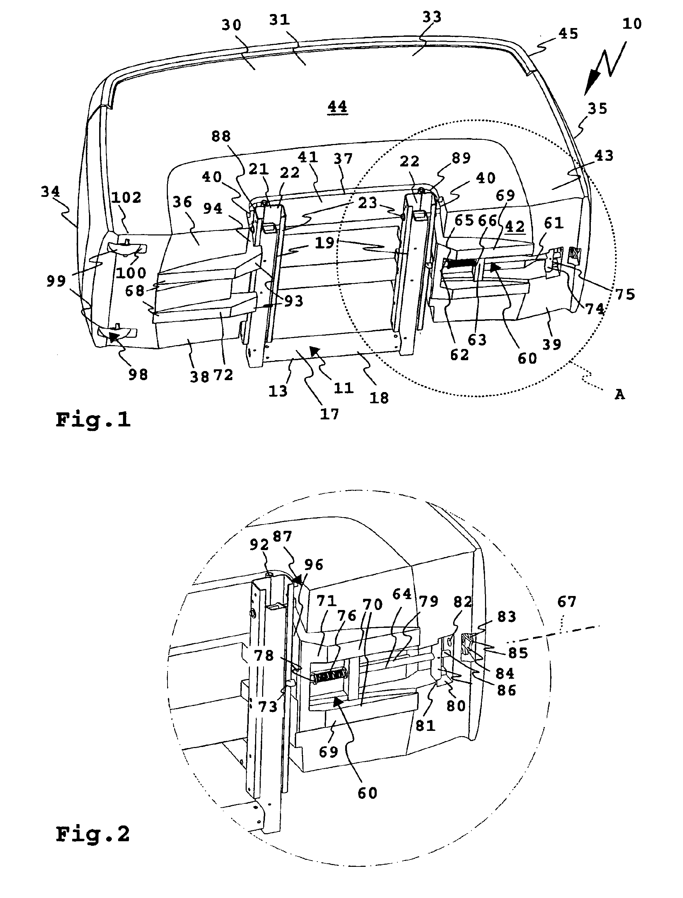

- Figur 1: eine perspektivische Ansicht schräg von unten eines Heckträgers mit einer an ihm angeordneten und fi- xierten Transporteinrichtung,
- Figur 2: ein Detail der Transporteinrichtung mit einer Be- festigungseinrichtung entsprechend einem Ausschnitt A in Figur 1,
- Figur 3: eine Frontalansicht des Heckträgers und der Trans- porteinrichtung von hinten, wobei der Transportbe- hälter teilweise von dem Heckträger weggeschwenkt ist,
- Figur 4: die Ansicht gemäß Figur 3, wobei die Transportein- richtung an dem Heckträger befestigt ist,
- Figur 5: eine Rolle einer Rollenanordnung entsprechend einem Detailausschnitt B in Figur 3,
- Figur 6: ein Lager der Rolle gemäß Figur 5 etwa entsprechend einem Ausschnitt C in Figur 5, und
- Figur 7: eine Draufsicht auf die Transporteinrichtung, den Heckträger und das den Heckträger aufweisende Kraftfahrzeug (schematisch) von oben.

Eine Transporteinrichtung 10 weist einen Heckträger 11 auf oder ist als solcher ausgebildet und kann auf einem Heckträger 11 eines Kraftfahrzeuges 12 befestigt und transportiert werden. Der Heckträger 11 weist eine Tragstruktur 13 auf. Die Tragstruktur 13 umfasst ein am Kraftfahrzeug 12, beispielsweise einem Personenkraftwagen, mittels einer Halteeinrichtung 14 an einem Kupplungsarm 15 einer Anhängekupplung 16 befestigbares Grundgestell 17 auf. Das Grundgestell 17 ist U-förmig, wobei von einem einen Grundschenkel bildenden Querträger 18 Seitenschenkel bildende stangenartige Längsträgerteile 19 abstehen. Die Längsträgerteile 19 sind vorliegend beispielsweise als Profilstäbe oder Stangen ausgestaltet und haben beispielsweise einen im Wesentlichen rechteckigen Querschnitt, wobei auch runde, rundovale oder sonstige Querschnitte durchaus denkbar sind und sich zur Befestigung und zum Tragen der Transporteinrichtung 10 eignen. Die Halteeinrichtung 14 ist an dem Querträger 18 angeordnet. Dieser erstreckt sich in Fahrzeugquerrichtung eines Hecks 20 des Kraftfahrzeugs 12.

An dieser Stelle sei bemerkt, dass beispielsweise auch eine nicht dargestellte Tragstruktur vorgesehen sein könnte, die im Heck 20 sozusagen versenkbar ist. Beispielsweise könnte ein Grundgestell in der Art des Grundgestells 17 in der Art einer Schublade in das Heck einschiebbar bzw. aus diesem ausziehbar sein, so dass in der ausgezogenen Stellung oder Fahrstellung die Transporteinrichtung 10 auf dem Grundgestell anordenbar ist.

Auf dem Grundgestell 17 ist ein Schwenkgestell 21 mit Auflage-Längsträgern 22 beweglich angeordnet, vorliegend schwenkbeweglich (eine Verschiebebewegung wäre denkbar). Das Schwenkgestell 21 ist an Schwenklagern 23 schwenkbar. Die beiden Schwenklager 23 befinden sich an dem vom Fahrzeug-Heck 20 entfernten Längsendbereichen der Längsträgerteile 19, so dass das Schwenkgestell 21 vom Heck 20 weggeschwenkt werden kann. Dies ermöglicht beispielsweise einen leichteren Zugang zum Heck 20, z.B. um eine Heckklappe des Kraftfahrzeuges 12 zu öffnen.

Von dem Schwenkgestell 21 steht zudem nach oben hin ein Haltebügel 24 ab, der zum Befestigen von auf dem Heckträger 11 transportierten Gegenständen, beispielsweise Fahrrädern und dergleichen eignet.

Am freien, vom Heck 20 weiter entfernten Endbereich des Schwenkgestells 21, das man auch als Auflagegestell oder Bewegungsgestell bezeichnen könnte, befindet sich ein Querträger 25, an dem beispielsweise Heckleuchten 26 sowie ein Kennzeichenträger 27 angeordnet sind.

Die Transporteinrichtung 10 ist zwischen dem Querträger 25 und dem Haltebügel 24 auf der Tragstruktur 13, insbesondere dem Schwenkgestell 21 derselben, anordenbar und stellt mit ihrem Transportbehälter 30 ein großes Transportvolumen bereit.

Die Transporteinrichtung 10 umfasst ein Behältergehäuse 31, am Kraftfahrzeug 12 montierten Zustand sich in dessen Querrichtung erstreckenden Wänden, nämlich einer Fahrzeug-Wand 32 sowie einer Heckwand 33, sowie als weitere Seitenwände eine bezogen auf die Fahrzeugfahrtrichtung linke Schmalseitenwand und eine rechte Schmalseitenwand 35, die sich zwischen den beiden Wänden 32, 33 erstrecken.

Ein Boden 36 des Behältergehäuses 31 umfasst einen mittleren Bodenwandabschnitt 37, der unmittelbar auf der Tragstruktur 13 anordenbar ist sowie bezogen auf die Fahrrichtung des Kraftfahrzeuges 12 einen linken und einen rechten Bodenwandabschnitt 38 und 39, die im am Heckträger 11 montierten Zustand seitlich neben der Tragstruktur 13 angeordnet sind. Der mittlere Bodenwandabschnitt 37 und die beiden rechten und linken Bodenwandabschnitt 38 und 39 sind durch Bodenseitenwandabschnitte 40 miteinander verbunden.

Die Bodenseitenwandabschnitte 40 bilden zusammen mit dem mittleren Bodenwandabschnitt 37 eine U-förmige Tragstruktur-Aufnahme 41, in der die Tragstruktur 13 im am Heckträger 11 montierten Zustand der Transporteinrichtung 10 eingreift. Dann befindet sich die Tragstruktur 13 in der Tragstruktur-Aufnahme 41. Während der mittlere Bodenwandabschnitt 37 oberhalb der Tragstruktur 13 und des Grundgestells 17 verläuft, verlaufen die beiden Bodenseitenwandabschnitte 40 seitlich neben dem Grundgestell 17.

Die Bodenwandabschnitte 38, 39 einerseits und der mittlere Bodenwandabschnitt 37 haben einen Vertikalabstand zueinander, der durch die beiden Bodenseitenwandabschnitte 40 überbrückt wird. Jedenfalls sind die beiden linken und rechten Bodenwandabschnitte 38 und 39 näher bei einem Untergrund 28 als der mittlere Bodenwandabschnitt 37. Dadurch ist oberhalb der beiden Bodenwandabschnitte 38 und 39 jeweils eine Transportkavität 42 vorhanden, die horizontal seitlich und unterhalb der Tragstruktur 13 angeordnet ist. Die in Bereichen 43 vorgesehene Transportkavität 42 hat eine besondere Schwerpunktlage. Zudem wird ein weit unten bezüglich einer Karosserie des Kraftfahrzeuges 12 befindlicher Bereich zu Transportzwecken verfügbar gemacht, so dass ein Volumen eines vom Transportbehälter begrenzten Innenraums 44 selbst dann verhältnismäßig groß ist, wenn der Transportbehälter 30 niedrig baut, beispielsweise nicht oder nur unwesentlich nach oben vor eine Heckklappe, insbesondere eine Heckklappe einer Limousinenkarossie des Kraftfahrzeuges 12, vorsteht.

Der Innenraum 44 ist mittels eines Deckels 45 verschließbar. Der Deckel 45 hat eine obere Deckelwand 46, die den Innenraum 44 von oben her abdeckt, sowie die beiden Schmalseitenwände 34 und 35 von oben her teilweise verdeckende Deckelwandabschnitte 47 und 48. Der Deckel 45 ist mittel Schwenklagern schwenkbar am Behältergehäuse 31 gelagert. Der in der Zeichnung linke seitliche Deckelwandabschnitt 47 umfasst zwei gabelartige Lagerschenkel 49, an deren einander zugewandten Innenseiten jeweils ein Lagerstück 50, insbesondere ein Wellenstück oder Lagerbolzen oder -vorsprung angeordnet ist. Die beiden Lagerstücke 50 sind in nach oben, d.h. zum Deckel 45 hin offenen Lageraufnahmen 51 aufgenommen. Die beiden Lageraufnahmen 51 befinden sich an einem mittleren, einen Handgriff 52 aufweisenden Schmalseitenwandsbschnitt 53 der Schmalseitenwand 34. Dadurch dass die Lageraufnahmen 51 nach oben hin offen sind, kann der Deckel 45 ohne Werkzeug vom Behältergehäuse 31 entfernt werden.

Auch am oberen, dem Deckel 45 zugewandten Endbereich der Schmalseitenwand 35 ist ein Schmalseitenwandabschnitt 53 mit einem Handgriff 52 angeordnet. Somit kann die Transportbox bzw. der Transportbehälter 30 an jeder der beiden Schmalseiten 34 und 35 ergriffen und bequem transportiert werden. Dies können auch zwei Bediener tun, die an einander entgegengesetzten Schmalseiten den Transportbehälter 30 an den jeweiligen Handgriffen 52 ergreifen und bequem tragen können. Aufgrund der verhältnismäßig großen Breite des Transportbehälters 30, was letztlich zu einer großen Transportkapazität beiträgt, ist eine Bedienung durch zwei Bediener komfortabler, wobei auch ein Bediener den Transportbehälter 30 bequem an den Handgriffen 52 ergreifen kann.

Am Deckelwandabschnitt 48 ist ferner ein Schloss 54 angeordnet, mit dem der Transportbehälter 30 verschlossen werden kann. Ein Riegel oder Haken 55, der mit dem Schloss 54 betätigbar ist, greift beispielsweise in eine in der Zeichnung nicht sichtbare Aufnahme an der Schmalseitenwand 35 ein.

An den Seitenrändern des Deckels 45 sind zweckmäßigerweise Nuten vorhanden, in die die oberen Schmalseiten der Seitenwände 32 bis 35 eingreifen. Zweckmäßigerweise kann dort auch eine Dichtung oder eine Dichtungsanordnung, insbesondere aus flexiblem Kunststoff, Gummi oder dergleichen angeordnet sein. Jedenfalls ist der Deckel 45 so dicht mit dem Behältergehäuse 31 verbindbar, dass ein Spritzwasserschutz, zweckmäßigerweise auch ein Schutz bei Reinigung mit einem Hochdruckreiniger, vorhanden ist.

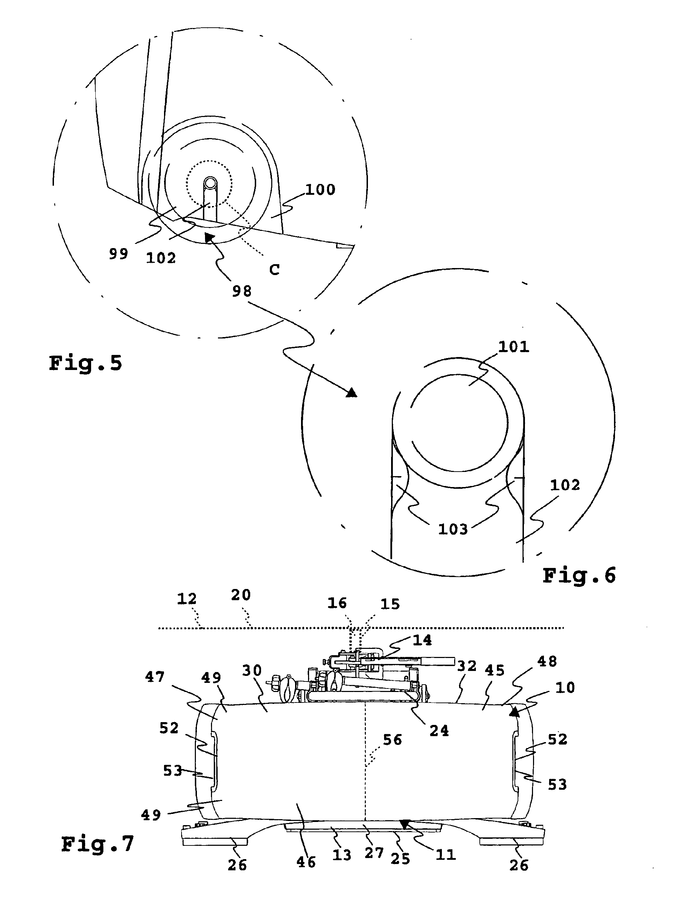

Eine in Figur 7 eingezeichnete Trennlinie 56 zeigt an, dass alternativ an Stelle des durchgehenden, einteiligen Deckels 45 auch zwei oder mehrere Deckelelemente, die zweckmäßigerweise schwenkbar an den Schmalseitenwänden 34 und 35 angelenkt sind, vorgesehen sein könnten. Der Deckel 45 jedoch, der die Seitenwände 32 bis 35 jeweils seitlich außen überkragt, bildet jedoch einen optimalen Schutz gegenüber Eindringen von Feuchtigkeit in den Innenraum 44. Ein in der Handhabung einfaches und beim Fahrbetrieb besonders sicheres Befestigen der Transporteinrichtung 10 am Heckträger 11 ist mittels einer erfindungsgemäß ausgestalteten Befestigungseinrichtung 60 möglich.

Die Befestigungseinrichtung 60 umfasst einen Riegelkörper 61 der an Schiebelagern 62, 63 schiebebeweglich an der Transporteinrichtung 10 gelagert ist. Die Schiebelager 62, 63 sind von dem als Verriegelungsstange 64 ausgestalteten Riegelkörper 61 durchdrungen. Die beiden Schiebelager 62, 63 sind an Längsrippen 65, 66 angeordnet, die nach unten vor den Bodenwandabschnitt 39 vorstehen. Die Längsrippen 65, 66 verlaufen in Längsrichtung des Kraftfahrzeuges 12 bzw. zumindest im Wesentlichen parallel zu den Längsträgerteilen 19. Die Schiebelager 62, 63 werden von Durchgangsöffnungen gebildet, deren Innenkontur mit der Außenkontur der Verriegelungsstange 64 korreliert, so dass der Riegelkörper 61 zwar entlang einer Längsachse 67 verschieblich, quer dazu jedoch ortsfest gehalten ist.

Die Längsrippen 65, 66 erstrecken sich zwischen Querrippen 69, die nach unten vor den Bodenwandabschnitt 39 vorstehen. An dem in der Zeichnung linken Bodenwandabschnitt 38 sind weitere Querrippen 68 angeordnet.

Die Querrippen 68, 69 haben jeweils eine Bodenseite 70 zum Abstellen auf dem Untergrund 28 sowie in Richtung der Tragstruktur-Aufnahme 41 hin Trägerseiten 71, die in Richtung der Tragstruktur-Aufnahme 41 nach schräg oben, das heißt zum mittleren Bodenwandabschnitt 37 hin geneigt sind. Mithin bilden also die Querrippen 68, 69 Kufen 72, die ein Aufsetzen auf den Heckträger 11 erleichtern.

Es versteht sich, dass die Querrippen 68, 69 sowie auch die Längsrippen 65, 66 zweckmäßigerweise auch eine Verstärkungsfunktion für das Behältergehäuse 31 haben.

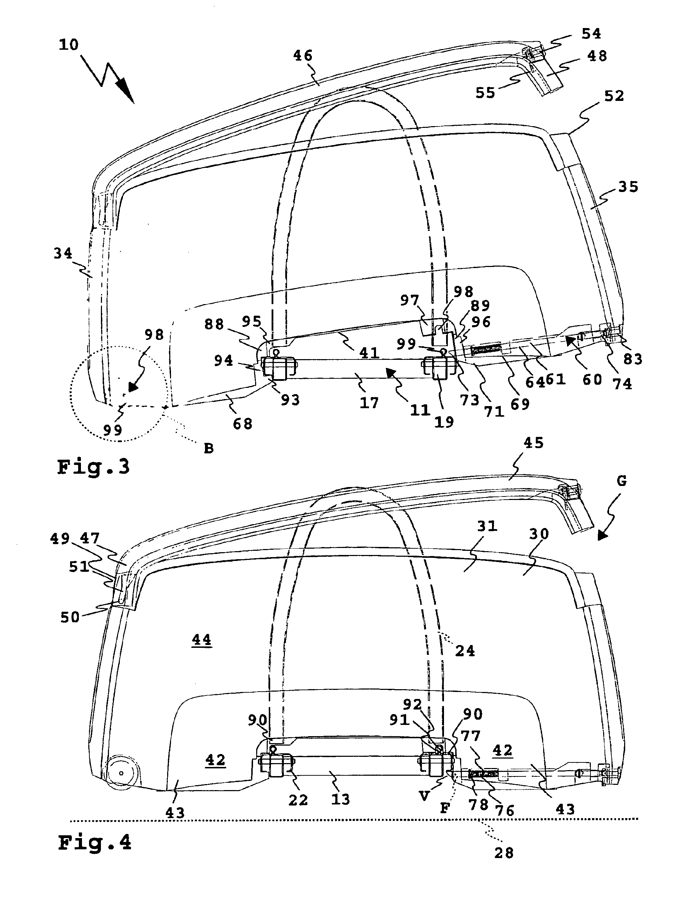

Die Trägerseiten 71 bilden, wie insbesondere in Figur 3 sichtbar, Einführschrägen oder Aufgleitschrägen, mit denen ein Aufsetzen der Transporteinrichtung 10 auf den Heckträger 11 erleichert wird. Die Trägerseiten 71 der Querrippen 69 gleiten an einer oberen Querkante des Schwenkgestells 21, im Konkreten des in der Zeichnung rechten Auflage-Längsträgers 22 entlang.

Quasi in Fortsetzung der schrägen Trägerseite 71 der Querrippen verläuft eine Gleitschräge 73 am vorderen, freien Ende des Riegelkörpers 61. Wenn die Transporteinrichtung 10 aus der in Figur 3 dargestellten Schrägstellung weiter in eine in Figur 4 dargestellte Horizontalposition verstellt wird, gleitet der Riegelkörper 61 mit seiner Gleitschräge 73 an der Tragstruktur 13, konkret am Auflagen-Längsträger 22, entlang und wird dadurch von seiner Verriegelungsstellung V (durchgezogene Linien) in eine Freigabestellung F (gestrichelte Linien) verstellt. Dann ist der Riegelkörper 61 so weit von der Tragstruktur 13 entfernt, insbesondere im Wesentlichen bündig oder bündig mit dem in der Zeichnung rechten Seitenschenkel der Tragstruktur-Aufnahme 41, beispielsweise dem Bodenseitenwandabschnitt 40 oberhalb des rechten Bodenwandabschnittes 39, dass die Transporteinrichtung 10 auf den Heckträger 11 aufgesetzt bzw. in einer Schwenkbewegung aufgeschwenkt werden kann und abschließend eine Fahrstellung oder Gebrauchsstellung G (Figur 4) einnimmt.

An dieser Stelle sei bemerkt, dass die Gleitschräge 73 des Riegelkörpers 61 eine optionale Maßnahme darstellt. Es kann auch vorgesehen sein, dass der Riegelkörper 61 vorne so ausgestaltet ist, dass er beim Schwenken aus der in Figur 3 dargestellten Position in die in Figur 4 dargestellte Gebrauchsstellung G an der Tragstruktur 13 anschlägt, beispielsweise der Oberseite des Auflage-Längsträgers 22. Dadurch entsteht ein Geräusch, das dem Bediener signalisiert, dass die Transporteinrichtung 10 zur Verriegelung bereit, jedoch noch nicht verriegelt ist. Erst durch einen aktiven Bedienereingriff, nämlich beispielsweise durch Betätigen des Riegelkörpers 61 an einem eine Bedienhandhabe 74 darstellenden Handgriff 75 kann dann der Riegelkörper 61 aus der Verriegelungsstellung V in die Freigabestellung F verstellt werden um sodann vollständig in seine in Figur 4 dargestellt Gebrauchslage weitergeschwenkt zu werden. Erst wenn also das vordere Ende des Riegelkörpers 61 den letzten Bereich des Schwenkweges freigibt, kann also die Tragstruktur 13 bei einer solchen Ausgestaltung einer erfindungsgemäßen Transporteinrichtung die selbe in die Gebrauchsstellung G schwenken.

Der Riegelkörper 61 ist durch eine Federanordnung 76 mit einer Feder 77 in seiner Verriegelungsstellung V federbelastet. Die Feder 77 stützt sich einerseits am Riegelkörper 61, beispielsweise einem Bund 78 oder einem sonstigen Vorsprung, und andererseits an dem Transportbehälter 30, vorliegend der Querrippe 69 ab. Die Feder 77 ist von der Verriegelungsstange 64 durchdrungen.

Zwar sind die Komponenten der Befestigungseinrichtung 60 an der Unterseite des Transportbehälter 30 bereits durch die Rippen 65, 66, 69 geschützt, die nach unten vor die beweglichen und festen Komponenten der Befestigungseinrichtung 60 vorstehen. Zusätzlich ist jedoch als weitere Schutzmaßnahme vorgesehen, dass die Verriegelungsstange 64 in einer Aufnahme 79 am Boden 36 aufgenommen ist, die sich entlang der Verriegelungsstange 64 erstreckt. Die Aufnahme 79 verläuft nahezu bis zur Schmalseitenwand 35 hin, wo sie sich zu einem Aufnahmeraum 80 vergrößert. In dem Aufnahmeraum 80 ist der Handgriff 75 angeordnet. Der Aufnahmeraum 80 hat einen vorderen und einen hinteren Anschlag 81, 82, an dem der Handgriff 75 in der Verriegelungsstellung V oder der Freigabestellung F anschlägt.

Der Handgriff 75 hat zwei Querarme, die seitlich vor die Verriegelungsstange 64 vorstehen und beispielsweise jeweils mit einem oder zwei Fingern eines Bedieners ergriffen werden können, wobei dann die Verriegelungsstange 64 in einem Zwischenraum zwischen den Fingern verläuft. Der Handgriff 75 ist relativ weit außenseitig, nämlich in der Nähe der Schmalseitenwand 35 angeordnet, so dass er bequem von einem Bediener ergriffen werden kann. Zudem realisiert der Handgriff 75 im Zusammenwirken mit den Anschlägen 81, 82 eine Begrenzung eines Bewegungsweges des Riegelkörpers 61 zwischen der Verriegelungsstellung V und der Freigabestellung F.

In der Verriegelungsstellung V ist der Riegelkörper 61 mittels eines Schlosses 83 verschließbar. Mit dem Schloss 83 ist ein Schlossriegel 84 betätigbar, der zwischen einer eine Bewegung des Riegelkörpers 61 in Richtung der Freigabestellung F freigebenden Stellung und einer den Weg des Riegelkörpers 61 in Richtung der Schmalseitenwand 35 begrenzenden und somit den Riegelkörper 61 in seiner Verriegelungsstellung V festlegenden Schließstellung verstellbar, im konkreten Ausführungsbeispiel verschwenkbar ist. Das Schloss 83 ist von außen her zugänglich, nämlich von der Schmalseitenwand 35 her. Das Schloss 83 und der Schlossriegel 84 sind in einer Schlossaufnahme 85 aufgenommen, die zwischen einer Außenseite der Schmalseitenwand 35 und dem Aufnahmeraum 80 als separate Aufnahme angeordnet ist. Mithin durchdringt ein Abschnitt 86 der Verriegelungsstange 64 eine Trennwand zwischen dem Aufnahmeraum 80 und der Schlossaufnahme 85 und steht somit in den Wirkbereich des Schlossriegels 84 vor. Wenn der Schlossriegel 84 in seiner Schließstellung ist, schlägt das freie Ende des Abschnitts 86 an diesem an.

Zum festen und sicheren Halt der Transporteinrichtung 10 am Heckträger 11 tragen weiterhin Haltekonturen 87 bei, die Formschlussaufnahmen 88 im Bereich des in der Zeichnung linken Bodenseitenwandabschnitts 40 und Formschlussaufnahmen 89 im Bereich des in der Zeichnung rechten Bodenseitenwandabschnitts 40 umfassen.

Die beiden Formschlussaufnahmen 88 sind starre, U-förmige Halteaufnahmen 90, die ausschließlich von starren Bestandteilen der Transporteinrichtung 10 gebildet werden, nämlich von Formschlussvorsprüngen 93, Stützabschnitten 94 sowie Auflageabschnitten 95. Die Formschlussvorsprünge 93 werden zweckmäßigerweise von den Querrippen 68 gebildet, nämlich von deren vorderen, der Tragstruktur-Aufnahme 41 zugewandten Endbereichen. Mit den Formschlussvorsprüngen 93 sind die Stützabschnitte 94 zweckmäßigerweise einstückig, die somit ebenfalls Bestandteile der Querrippen 68 bilden. Die Stützabschnitte 94 sind an dem Bodenseitenwandabschnitt 40 angeordnet, nämlich an seiner der Tragstruktur-Aufnahme 41 zugewandten Innenseite. Dadurch ist der Bodenseitenwandabschnitt 40 im Bereich der Tragstruktur-Aufnahme 41 verstärkt, was zu einem sicheren Halt der Transporteinrichtung 10 am Heckträger 11 beiträgt. Der Stützabschnitt 94 geht in einen Auflageabschnitt 95 über, der ebenfalls vor den Boden 36 vorsteht, nämlich dessen mittleren Bodenwandabschnitt 37 und den daran angrenzenden Bodenseitenwandabschnitt 40.

Das vordere freie Ende des Riegelkörpers 61 bildet im Zusammenhang mit den Formschlussaufnahmen 89 sozusagen ein Pendant zu den Formschlussvorsprüngen 93 und untergreift wie diese eine Unterseite des auf dem Längsträgerteil 19 aufliegenden Auflage-Längsträgers 22. An dem vom Riegelkörper 61 durchdrungenen in der Zeichnung rechten Bodenseitenwandabschnitt 40 ist ebenfalls ein Stützabschnitt 96 oder eine Verstärkung vorgesehen, die in der in Figur 4 dargestellten Gebrauchslage, d.h. im am Heckträger 11 montierten Zustand, an der Tragstruktur 13 anliegt.

Oberhalb des Stützabschnittes 96 befindet sich korrespondierend zum Auflageabschnitt 95 ebenfalls ein Auflageabschnitt 97, der in der Art einer Rippe oder Verstärkung ausgestaltet ist und auf der Oberseite der Tragstruktur 13 zu liegen kommt. Im Auflageabschnitt 97 ist eine Profilaufnahme 91 zur Aufnahme eine Profils 92 der Tragstruktur 13 vorgesehen. Das Profil 92 ist beispielsweise zur Aufnahme von Achswellen oder Lagerwellen für in der Zeichnung nicht dargestellte Fahrradträgerteile, insbesondere Fahrradträgerrinnen. Die Profilaufnahme 91 ist im Wesentlichen U-förmig, d.h. sie kann das Profil 92 vollständig aufnehmen. Korrespondierend dazu ist bei dem Stützabschnitt 94 jedoch keine Profilaufnahme, sondern lediglich eine Aussparung vorgesehen.

Wenn die Transporteinrichtung 10 von der in Figur 3 dargestellten Stellung in seine Gebrauchsstellung G gemäß Figur 4 geschwenkt wird, ermöglicht die Aussparung am in der Zeichnung linken Stützabschnitt 94 diese Schwenkbewegung bzw. stellt einen Schwenkfreiraum bereit, während das Profil 92 in die Profilaufnahme 91 eindringen kann. Abschließend verstellt die Feder 77 den Riegelkörper 61 wieder in seiner Verriegelungsstellung V, so dass dieser zusammen mit dem Stützabschnitt 96 und dem Auflageabschnitt 97 die in der Zeichnung rechte, U-förmige Halteaufnahme 90 bildet. Die beiden Halteaufnahmen 90 sind also wie gesagt jeweils U-förmig und umgreifen die Tragstruktur 13, konkret das Schwenkgestell 21, voneinander entgegengesetzten Seiten her, so dass dieses quasi umklammert ist. Dadurch ist ein besonders fester Halt der Transporteinrichtung 10 am Heckträger 11 möglich. Die Profilaufnahme 91 realisiert hierbei noch eine zusätzliche Befestigung, vorzugsweise Verklemmung.

Die Formschlussvorsprünge 93 sowie der Riegelkörper 61 untergreifen die Tragstruktur 13 in der Verriegelungsstellung V. Somit kann die Transporteinrichtung 10 nicht mehr nach oben von der Tragstruktur 13 entsprechend z.B. Figur 3 wegbewegt werden und ist also nach vertikal oben fixiert.

Die Formschlussvorsprünge 93 und der Riegelkörper 61 untergreifen allerdings nur das Schwenkgestell 21, nämlich die Auflage-Längsträger 22. Somit ist es möglich, das Schwenkgestell 21 mit der auf ihr befestigten Transporteinrichtung 10 zu schwenken. Es wäre prinzipiell auch möglich, dass anders als in der Zeichnung dargestellt die Formschlussvorsprünge 93 und der Riegelkörper 61 noch weiter nach innen in der Verriegelungsstellung V vorstehen und zusätzlich noch das Grundgestell 17 untergreifen, nämlich dessen Längsträgerteile 19, so dass das Schwenkgestell 21, also eine erste Tragstrukturkomponente, bezüglich des Grundgestells 17, also einer zweiten Tragstrukturkomponente, fixiert wäre.

Eine Innenkontur der Halteaufnahmen 90 passt genau zu einer Außenkontur der Auflage-Längsträger 22. Wenn also ein Bediener versehentlich die in der Zeichnung linke Halteaufnahme 90 nicht wie in Figur 3 dargestellt sozusagen am Heckträger 11 einhakt, sondern die Formschlussvorsprünge 93 auf der Oberseite der Auflage-Längsträger 22 aufliegen, kann die Transporteinrichtung 10 nicht in die in Figur 4 dargestellte Gebrauchsstellung G geschwenkt werden, so dass eine Verriegelung mit dem Riegelkörper 61 unmöglich ist.

Eine Verriegelung ist ebenfalls nicht möglich, wenn zwar die in der Zeichnung rechte Halteaufnahme 90 in die Tragstruktur 13 sozusagen eingehakt ist und die Transporteinrichtung 10 sodann von hinten her gesehen nach links geschwenkt werden soll. Dann stoßen die beiden Formschlussvorsprünge 93 an der Oberseite des in der Zeichnung linken Auflage-Längsträgers 22 an, so dass die Gebrauchslage G gemäß Figur 4 nicht erreicht wird.

Vorteilhaft ist also bei einer erfindungsgemäßen Transporteinrichtung vorgesehen, dass sie eine Formschlussaufnahme aufweist, die bei in Verriegelungsstellung V befindlichem Riegelkörper 61 nicht in Eingriff mit der Tragstruktur bringbar ist.

Ein Transport der Transporteinrichtung 10 wäre beispielsweise durch Gleiten auf den Kufen 72 abseits des Heckträgers 11 möglich. Wesentlich komfortabler ist es jedoch, den Transportbehälter 30 mittels einer Rollenanordnung 98 auf dem Untergrund zu verfahren. Die Rollenanordnung 98 umfasst zwei Rollen 99, die zweckmäßigerweise in Rollenaufnahmen 100 des Transportbehälters 30 im Wesentlich aufgenommen sind und nur teilweise vor eine Außenkontur des Transportbehälters 30 vorstehen. Die Rollenaufnahmen 100 sind taschenartig, so dass man sie auch als Rollenaufnahmetaschen bezeichnen könnte.

Die beiden Rollen 99 sind an unteren Eckbereichen des Transportbehälters 30 angeordnet, nämlich am Boden 36 nahe der linken Schmalseitenwand 34. Die Rollen 99 sind von Achswellen oder Lagerwellen 101 durchdrungen, die in Lageraufnahmen 102 der Transporteinrichtung 10 aufgenommen sind. Die Lageraufnahmen 102 erstrecken sich quer zu den Rollenaufnahmen 100. In den Lageraufnahmen 102 sind Rastvorsprünge 103 vorgesehen. Somit können die Lagerwellen 101, die beidseits vor Seitenflächen der Rollen 99 vorstehen, jeweils in den Lageraufnahmen 102, die nach unten hin, d.h. zum Boden 36 hin, offen sind quasi eingerastet werden. Eine Montage der Rollen 99 ist dadurch besonders einfach. Anderseits liegen die Lagerwellen oder Lagerachsen 101 an einem oberen, geschlossenen Ende der Lageraufnahmen 102 an, wo sich der Transportbehälter 30 sozusagen auf den Lagerwellen 101 abstützt.

## Patentansprüche

1. Transporteinrichtung, die insbesondere einen Transportbehälter (30) aufweist oder bildet, für einen Heckträger (11), der an einem Heck (20) eines Kraftfahrzeugs (11) angeordnet oder anordenbar ist und eine Tragstruktur (13) zum Tragen der Transporteinrichtung (10) aufweist, wobei die Transporteinrichtung (10) mit einer Befestigungseinrichtung (60) an der Tragstruktur (13) befestigbar ist, wobei die Befestigungseinrichtung (60) mindestens einen an der Transporteinrichtung (10) beweglich, insbesondere verschieblich, zwischen einer zum Entfernen der Transporteinrichtung (10) von der Tragstruktur (13) vorgesehenen Freigabestellung (F) und einer Verriegelungsstellung (V) gelagerten Riegelkörper (61) umfasst, der in der Verriegelungsstellung (V) die Transporteinrichtung (10) an der Tragstruktur (13) fixiert, wobei die Befestigungseinrichtung (60) mindestens eine von dem Riegelkörper (61) separate Haltekontur (87) zum mit dem mindestens einen Riegelkörper (61) zusammenwirkenden Fixieren der Transporteinrichtung (10) an der Tragstruktur (13) aufweist, und wobei die mindestens eine Haltekontur (87) beim Fixieren der Transporteinrichtung (10) im Eingriff oder Hintergriff mit der Tragstruktur (13) ist, **dadurch gekennzeichnet, dass** die Transporteinrichtung (10) eine im wesentlichen u-förmige Tragstruktur-Aufnahme (41) aufweist, in die die Tragstruktur (13), insbesondere mit zwei nebeneinander angeordneten Längsträgerteilen (19) eingreift, wenn die Transporteinrichtung (10) an der Tragstruktur (13) befestigt ist, und dass der mindestens eine Riegelkörper (61) und die mindestens eine Haltekontur (87) an einander gegenüberliegenden Seiten der Tragstruktur-Aufnahme (41) angeordnet sind.

2. Transporteinrichtung nach Anspruch 1, **dadurch gekennzeichnet, dass** der mindestens eine Riegelkörper (61) durch eine Federanordnung (76) in die Verriegelungsstellung (V) federbelastet ist und/oder dass der mindestens eine Riegelkörper (61) eine Gleitschräge (73) aufweist, mit der er bei einer Bewegung von der Freigabestellung (F) in die Verriegelungsstellung (V) und/oder umgekehrt an der Tragstruktur (13) entlang gleitet.

3. Transporteinrichtung nach Anspruch 1 oder 2, **dadurch gekennzeichnet, dass** der mindestens eine Riegelkörper (61) in der Verriegelungsstellung (V) im Eingriff und/oder Hintergriff mit einer insbesondere als Längsträgerteil (19) ausgestalteten Tragstrukturkomponente (13) ist.

4. Transporteinrichtung nach einem der vorhergehenden Ansprüche, **dadurch gekennzeichnet, dass** der mindestens eine Riegelkörper (61) in der Verriegelungsstellung (V) eine erste Tragstrukturkomponente (21) bezüglich einer zweiten Tragstrukturkomponente (17) der Tragstruktur (13) fixiert, wobei der mindestens eine Riegelkörper (61) zweckmäßigerweise in eine Teil-Verriegelungsstellung bringbar, insbesondere in der Teil-Verriegelungsstellung verrastbar, ist, in der er die zweite Tragstrukturkomponente (17) freigibt und in Verriegelungseingriff mit der ersten Tragstrukturkomponente (21) bleibt.

5. Transporteinrichtung nach einem der vorhergehenden Ansprüche, **dadurch gekennzeichnet, dass** die mindestens eine Haltekontur (87) eine Formschlussaufnahme (88, 89) und/oder einen Formschlussvorsprung (93) aufweist und/oder dass die Formschlussaufnahme (88, 89) zur Aufnahme der Tragstruktur (13), insbesondere eines Längsträgerteils (19) der Tragstruktur (13), alleine und/oder in Verbindung mit dem mindestens einen Riegelkörper (61) in der Art eines Aufnahmemauls ausgestaltet ist und/oder dass die mindestens eine Haltekontur (87) mindestens zwei dem mindestens einen Riegelkörper (61) gegenüberliegende gabelartige Haltevorsprünge und/oder Halteaufnahmen (90) aufweist.

6. Transporteinrichtung nach einem der vorhergehenden Ansprüche, **dadurch gekennzeichnet, dass** sie an einander gegenüberliegenden Seiten der Tragstruktur-Aufnahme (41) jeweils eine durch die mindestens eine Haltekontur (87) und/oder den mindestens einen Riegelkörper (61) gebildete u-förmige Halteaufnahmen (90) zur Aufnahme der Tragstruktur (13), insbesondere zweier nebeneinander angeordneter Längsträgerteile (19) der Tragstruktur (13), aufweist.

7. Transporteinrichtung nach einem der vorhergehenden Ansprüche, **dadurch gekennzeichnet, dass** sie mindestens eine insbesondere nahe dem mindestens einen Riegelkörper (61) angeordnete Profilaufnahme (91) zum Eingriff eines Profils (92) der Tragstruktur (13) aufweist und/oder dass die Befestigungseinrichtung (60) ein Schloss (83) zum Festlegen des mindestens einen Riegelkörpers (61) in der Verriegelungsstellung (V) und/oder der Freigabestellung (F) umfasst.

8. Transporteinrichtung nach einem der vorhergehenden Ansprüche, **dadurch gekennzeichnet, dass** sie mindestens eine Kufe (72) zum Gleiten auf einem Untergrund (28), insbesondere auf der Tragstruktur (13), aufweist.

9. Transporteinrichtung nach einem der vorhergehenden Ansprüche, **dadurch gekennzeichnet, dass** sie eine Bedienhandhabe (74) zur Betätigung des mindestens einen Riegelkörpers (61) zwischen der Verriegelungsstellung (V) und der Freigabestellung (F) aufweist, wobei die Bedienhandhabe (74) zweckmäßigerweise von einer Unterseite der Transporteinrichtung (10) oder insbesondere ausschließlich von einem Innenraum (44) der Transporteinrichtung (10) her betätigbar ist.

10. Transporteinrichtung nach einem der vorhergehenden Ansprüche, **dadurch gekennzeichnet, dass** ein Deckel (45) der Transporteinrichtung (10) in einer einen Innenraum (44) der Transporteinrichtung (10) verdeckenden oder verschließenden Abdeckstellung eine Betätigung des Riegelkörpers (61) blockiert.

11. Transporteinrichtung nach einem der vorhergehenden Ansprüche, **dadurch gekennzeichnet, dass** sie mindestens einen Bereich (43), insbesondere eine Transportkavität (42), aufweist, der im am Heckträger (11) montierten Zustand horizontal-seitlich neben der Tragstruktur (13) und/oder unterhalb der Tragstruktur (13) angeordnet ist.

12. Transporteinrichtung nach einem der vorhergehenden Ansprüche, **dadurch gekennzeichnet, dass** sie eine Rollenanordnung (98) zum Fahren auf einem Untergrund (28) aufweist.

13. Transporteinrichtung nach Anspruch 12, **dadurch gekennzeichnet, dass** die Rollenanordnung (98) ein insbesondere an einer Schmalseite der Transporteinrichtung (10) angeordnetes Rollenpaar aufweist und/oder dass mindestens eine Rolle (99) der Rollenanordnung (98) nur teilweise vor eine Außenkontur der Transporteinrichtung (10) vorsteht und/oder dass sie einen Transportbehälter (30) aufweist oder bildet und einen vorzugsweise schwenkbeweglich an ihr gelagerten Deckel (45) aufweist.

## Claims

1. Transporting device, in particular comprising or forming a transport container (10), for a rear carrier (11) which is or can be mounted on a rear (20) of a motor vehicle (11) and comprises a support structure (13) for supporting the transporting device (10), wherein the transporting device (10) can be secured to the support structure (13) using a mounting device (60), wherein the mounting device (60) comprises at least one latch body (61) movably mounted on the transporting device (10) and in particular slidable between a release position (F) provided for removing the transporting device (10) from the support structure (13) and a locking position (V), which latch body (61) locates the transporting device (10) on the support structure (13) in the locking position (V), wherein the mounting device (60) comprises at least one holding contour (87) separate from the latch body (61) for locating the transporting device (10) on the support structure (13) in co-operation with the at least one latch body (61), and wherein the at least one holding contour (87) is, when locating the transporting device (10), in engagement or in engagement from behind with the support structure (13), **characterised in that** the transporting device (10) comprises a substantially U-shaped support structure receptacle (41) with which the support structure (13), in particular with two side member parts (19) arranged side by side, engages when the transporting device (10) is secured to the support structure (13), and **in that** the at least one latch body (61) and the at least one holding contour (87) are arranged on opposite sides of the support structure receptacle (41).

2. Transporting device according to claim 1, **characterised in that** the at least one latch body (61) is spring-loaded towards the locking position (V) by a spring arrangement (76), and/or **in that** the at least one latch body (61) comprises a sliding bevel (73) with which it slides along the support structure (13) while moving from the release position (F) into the locking position (V) and/or vice versa.

3. Transporting device according to claim 1 or 2, **characterised in that** the at least one latch body (61) is in the locking position (V) in engagement and/or in engagement from behind with a support structure component (13) which is in particular designed as a side member part (19).

4. Transporting device according to any of the preceding claims, **characterised in that** the at least one latch body (61) fixes in the locking position (V) a first support structure component (21) relative to a second support structure component (17) of the support structure (13), wherein the at least one latch body (61) can expediently be brought into a partial locking position and can in particular be latched in the partial locking position, in which it releases the second support structure component (17) while remaining in locking engagement with the first support structure component (21).

5. Transporting device according to any of the preceding claims, **characterised in that** the at least one holding contour (87) comprises a positive-locking receptacle (88, 89) and/or a positive-locking projection (93), and/or **in that** the positive-locking receptacle (88, 89) is designed in the manner of a receiving gap on its own and/or in combination with the at least one latch body (61) for receiving the support structure (13), in particular a side member part (19) of the support structure (13), and/or **in that** the at least one holding contour (87) comprises at least two fork-type holding projections and/or holding receptacles located opposite the at least one latch body (61).

6. Transporting device according to any of the preceding claims, **characterised in that** it comprises on each of the two opposite sides of the support structure receptacle (41) a U-shaped holding receptacle (90) represented by the at least one holding contour (87) and/or the at least one latch body (61) for receiving the support structure (13), in particular two side member parts (19) arranged side by side.

7. Transporting device according to any of the preceding claims, **characterised in that** it comprises at least one profiled receptacle (91) located in particular close to the at least one latch body (61) for engaging with a profile (92) of the support structure (13), and/or **in that** the mounting device (60) includes a lock (83) for fixing the at least one latch body (61) in the locking position (V) and/or in the release position (F).

8. Transporting device according to any of the preceding claims, **characterised in that** it comprises at least one runner (72) for sliding on a base (28), in particular on the support structure (13).

9. Transporting device according to any of the preceding claims, **characterised in that** it comprises an operating handle (74) for operating the at least one latch body (61) between the locking position (V) and the release position (F), wherein the operating handle (74) can expediently be operated from an underside of the transporting device (10) or in particular exclusively from an interior (44) of the transporting device (10).

10. Transporting device according to any of the preceding claims, **characterised in that** a cover (45) of the transporting device (10) blocks an operation of the latch body (61) in a covering position covering or closing the interior (44) of the transporting device (10).

11. Transporting device according to any of the preceding claims, **characterised in that** it comprises at least one region (43), in particular a transport cavity (42), which is located horizontally at the side of the support structure (13) and/or below the support structure (13) when the transporting device is mounted on the rear carrier (11).

12. Transporting device according to any of the preceding claims, **characterised in that** it comprises a roller arrangement (98) for travelling on a base (28).

13. Transporting device according to claim 12, **characterised in that** the roller arrangement (98) comprises a pair of rollers which is in particular located on a narrow side of the transporting device (10), and/or **in that** at least one roller (99) of the roller arrangement (98) protrudes only partially in front of an external contour of the transporting device (10), and/or **in that** it comprises or forms a transport container (30) and has a cover (45) which is preferably mounted pivotably thereon.

## Revendications

1. Dispositif de transport qui présente ou forme en particulier un récipient de transport (30) pour un porte-charge arrière (11) qui est ou peut être disposé sur une partie arrière (20) d'un véhicule automobile (11) et une structure porteuse (13) destinée à porter le dispositif de transport (10), le dispositif de transport (10) pouvant être fixé avec un dispositif de fixation (60) sur la structure porteuse (13), le dispositif de fixation (60) comportant au moins un corps de verrou (61) disposé sur le dispositif de transport (60) de manière mobile, en particulier coulissante, entre une position de libération (F) prévue pour l'éloignement du dispositif de transport (10) de la structure porteuse (13) et une position de verrouillage (V), lequel corps de verrou (61) fixe dans la position de verrouillage (V) le dispositif de transport (10) sur la structure porteuse (13), le dispositif de fixation (60) présentant au moins un contour de retenue (87) séparé du corps de verrou (61) pour la fixation concourante avec l'au moins un corps de verrou (61) du dispositif de transport (10) sur la structure porteuse (13), et l'au moins un contour de retenue (87) étant en engagement avec ou venant en prise derrière la structure porteuse (13) lors de la fixation du dispositif de transport (10), **caractérisé en ce que** le dispositif de transport (10) présente un logement de structure porteuse (41) sensiblement en forme de U, dans lequel la structure porteuse (13) s'engage en particulier avec deux parties porteuses longitudinales (19) disposées l'une à côté de l'autre, lorsque le dispositif de transport (10) est fixé sur la structure porteuse (13), et **en ce que** l'au moins un corps de verrou (61) et l'au moins un contour de retenue (87) sont disposés sur des côtés opposés du logement de structure porteuse (41).

2. Dispositif de transport selon la revendication 1, **caractérisé en ce que** l'au moins un corps de verrou (61) est sollicité par ressort par un ensemble de ressort (76) dans la position de verrouillage (V) et/ou **en ce que** l'au moins un corps de verrou (61) présente un biais de glissement (73), avec lequel il glisse le long de la structure porteuse (13) lors d'un mouvement de la position de libération (F) à la position de verrouillage (V) et/ou inversement.

3. Dispositif de transport selon la revendication 1 ou 2, **caractérisé en ce que** l'au moins un corps de verrou (61) dans la position de verrouillage (V) est en engagement et/ou vient en prise derrière un composant de structure porteuse (13) configuré en particulier comme partie porteuse longitudinale (19).

4. Dispositif de transport selon l'une quelconque des revendications précédentes, **caractérisé en ce que** l'au moins un corps de verrou (61) fixe dans la position de verrouillage (V) un premier composant (21) par rapport à un second composant (17) de la structure porteuse (13), l'au moins un corps de verrou (61) pouvant être amené de manière appropriée dans une position de verrouillage partielle, en particulier pouvant être encliqueté dans la position de verrouillage partielle, dans laquelle il libère le second composant de structure porteuse (17) et reste en engagement de verrouillage avec le premier composant de structure porteuse (21).

5. Dispositif de transport selon l'une quelconque des revendications précédentes, **caractérisé en ce que** l'au moins un contour de retenue (87) présente un logement à complémentarité de formes (88, 89) et/ou une saillie à complémentarité de formes (93) et/ou **en ce que** le logement à complémentarité de formes (88, 89) est configuré pour le logement de la structure porteuse (13), en particulier d'une partie porteuse longitudinale (19) de la structure porteuse (13), seul et/ou en liaison avec l'au moins un corps de verrou (61) comme une mâchoire de réception et/ou **en ce que** l'au moins un contour de retenue (87) présente au moins deux saillies de retenue (90) de type fourche opposées à l'au moins un corps de verrou (61) et/ou logements.

6. Dispositif de transport selon l'une quelconque des revendications précédentes, **caractérisé en ce qu'**il présente sur des côtés opposés du logement de la structure porteuse (41) respectivement un logement de retenue (90) en forme de U formé par l'au moins un contour de retenue (87) et/ou l'au moins un corps de verrou (61) pour le logement de la structure porteuse (13), en particulier de deux parties porteuses longitudinales (19) disposées l'une à côté de l'autre de la structure porteuse (13).

7. Dispositif de transport selon l'une quelconque des revendications précédentes, **caractérisé en ce qu'**il présente au moins un logement profilé (91) disposé en particulier près de l'au moins un corps de verrou (61) pour l'engagement d'un profilé (92) de la structure porteuse (13) et/ou **en ce que** le dispositif de fixation (60) comporte une serrure (83) pour la fixation de l'au moins un corps de verrou (61) dans la position de verrouillage (V) et/ou la position de libération (F).

8. Dispositif de transport selon l'une quelconque des revendications précédentes, **caractérisé en ce qu'**il présente au moins un patin (72) pour glisser sur un fond (28), en particulier sur la structure porteuse (13).

9. Dispositif de transport selon l'une quelconque des revendications précédentes, **caractérisé en ce qu'**il présente une manette de commande (74) pour l'actionnement d'au moins un corps de verrou (61) entre la position de verrouillage (V) et la position de libération (F), la manette de commande (74) pouvant être actionnée de manière appropriée depuis un côté inférieur du dispositif de transport (10) ou en particulier exclusivement depuis un espace intérieur (44) du dispositif de transport (10).

10. Dispositif de transport selon l'une quelconque des revendications précédentes, **caractérisé en ce qu'**un couvercle (45) du dispositif de transport (10) bloque un actionnement du corps de verrou (61) dans une position de recouvrement fermant ou recouvrant un espace intérieur (44) du dispositif de transport (10).

11. Dispositif de transport selon l'une quelconque des revendications précédentes, **caractérisé en ce qu'**il présente au moins une zone (43) en particulier une cavité de transport (42) qui est disposée, dans l'état monté sur le porte-charge arrière (11), horizontalement et latéralement à côté de la structure porteuse (13) et/ou sous la structure porteuse (13).

12. Dispositif de transport selon l'une quelconque des revendications précédentes, **caractérisé en ce qu'**il présente un ensemble de rouleaux (98) destiné à rouler sur un fond (28).

13. Dispositif de transport selon la revendication 12, **caractérisé en ce que** l'ensemble de rouleaux (98) présente une paire de rouleaux disposée en particulier sur un petit côté du dispositif de transport (10) et/ou **en ce qu'**au moins un rouleau (99) de l'ensemble de rouleaux (98) ne dépasse qu'en partie d'un contour extérieur du dispositif de transport (10) et/ou **en ce qu'**il présente ou forme un récipient de transport (30) et présente un couvercle (45) logé de préférence de manière mobile en pivotement sur celui-ci.
